# EUROPÄISCHE PATENTSCHRIFT

(11) **EP 3 330 062 B1**
(45) Veröffentlichungstag und Bekanntmachung des Hinweises auf die Patenterteilung: **09.02.2022**
(21) Anmeldenummer: 16201429.4
(22) Anmeldetag: 30.11.2016
(51) Int. Cl.: B29C 67/00, B33Y 40/00

(54) **MATERIALBEREITSTELLUNGSVORRICHTUNG FÜR EIN STEREOLITHOGRAPHIEGERÄT**
MATERIAL FEEDING DEVICE FOR A STEREOLITHOGRAPHY APPARATUS
DISPOSITIF D'ALIMENTATION DE MATÉRIAU POUR UN APPAREIL DE STÉRÉOLITHOGRAPHIE

(43) Veröffentlichungstag der Anmeldung: 06.06.2018
(73) Patentinhaber: Ivoclar Vivadent AG, 9494 Schaan (LI)
(72) Erfinder: Pokorny, Walter, 6718 Bludesch (AT); Jussel, Rudolf, 6800 Feldkirch (AT); Lorünser, Johannes, 6700 Bludenz (AT); Ebert, Jörg, 9470 Buchs (CH)
(74) Vertreter: Baronetzky, Klaus

(56) Entgegenhaltungen:
- EP-A2- 1 946 911
- WO-A1-2015/092717
- JP-A- H07 195 529
- US-A1- 2012 195 994
- US-A1- 2014 052 288

## Beschreibung

Die Erfindung betrifft eine Materialbereitstellungsvorrichtung, gemäß dem Oberbegriff von Anspruch 1 bzw. 22, die insbesondere für Stereolithografiegeräte bestimmt ist.

Rapid-Prototyping-Verfahren werden in zunehmendem Maße angewandt, um basierend auf CAD/CAM-Daten Bauteile rasch und mit hoher Präzision zu fertigen.

Unter den bekannten Verfahren ragt das Stereolithografieverfahren heraus, das insbesondere im Bereich der Dentaltechnik verwendet wird und weiterverwendet werden kann. In an sich bekannter Weise wird das betreffende Bauteil aus einer Flüssigkeit, dem Druckmaterial, unter Belichtung von bestimmten Strukturen schichtweise aufgebaut.

Die Schichtstärke liegt hierbei zwischen 0,05 und 0,25mm was entsprechend hohen Anforderungen an den Antrieb der Bauplattform beziehungsweise auch an die Bereitstellung des Druckmaterial-Bades stellt.

Andererseits sind unterschiedliche Strukturen für die Herstellung unterschiedlicher Bauteile erforderlich. Allein von der Farbwahl her ist es günstig, auf unterschiedliche Druckmaterialien zurückgreifen zu können.

Daher ist es bereits vorgeschlagen worden, mit beweglichen Wannen zu arbeiten, die je ein Druckmaterial der je gewünschten Farbe aufnehmen, und die erwünschte Wanne mit der entsprechend erwünschten Farbe des Druckmaterials in den aktiven Bereich, also in den Bereich, in dem das Bauteil hergestellt wird, zu verfahren.

Nachdem die verwendeten Druckmaterialien typischerweise lichtempfindlich sind, hat man die Wannen mit einem geeigneten Deckel oder einer sonstigen Abdeckung versehen, um ein vorzeitiges Austrocknen des Druckmaterials zu vermeiden.

Diese Lösung ist jedoch nicht befriedigend, da die Handhabung der Wannen häufig zu Verlusten an Druckermaterial und auch zu Verunreinigungen der Umgebung führt oder zumindest führen kann, wobei auch Verwechslungen nicht ausgeschlossen sind.

Aus der WO 2015/092717 A1 ist eine Materialbereitstellungsvorrichtung bekannt, die eine verschiebbare Wanne aufweist. In die Wandung der Wanne ist ein als Kartusche interpretierbarer Materialvorrat integriert. Die Wanne ist somit zusammen mit der Kartusche verschiebbar. Eine Relativbewegung von Wanne und Kartusche ist nicht möglich.

Aus der WO 2010/45951 A1 ist ein weiteres Stereolithographieverfahren bekannt, bei dem unter anderem eine Wanne und eine Kartusche eingesetzt werden. Nachteilig ist die geringe Flexibiltät des Verfahrens insbesondere beim Wechsel des Druckmaterials.

Demgegenüber liegt der Erfindung die Aufgabe zugrunde, eine Materialbereitstellungsvorrichtung gemäß dem Oberbegriff von Anspruch 1 zu schaffen, die eine universellere Verwendung des betreffenden Stereolithografiegeräts ermöglicht, und zudem bedienungssicher ist.

Diese Aufgabe wird erfindungsgemäß durch Anspruch 1 gelöst. Vorteilhafte Weiterbildungen ergeben sich aus den Unteransprüchen.

Erfindungsgemäß ist eine Materialbereitstellungsvorrichtung mit einer Materialkartusche vorgesehen, die auch als Kassette bezeichnet werden könnte und die allseitig geschlossen ist. Durch die geschlossene Ausgestaltung wird eine lichtdichte Materialbereitstellungsvorrichtung geschaffen, unabhängig davon, ob die Kartusche eingebaut ist oder nicht.

Die Materialbereitstellungsvorrichtung umfasst insofern einen Aufnahmerahmen, der öffenbar ist und lichtdicht verschließbar ist. In diesem kann die erfindungsgemäße insbesondere biegeschlaffe Materialkartusche eingesetzt werden. Diese nimmt ihrerseits das Druckmaterial auf und ist so ausgestaltet, dass das Druckmaterial für die Rapid-Prototyping-Vorrichtung abgegeben werden kann.

Erfindungsgemäß ist eine Wanne vorgesehen, in die das Druckmaterial aus der Materialkartusche abgegeben werden kann. Die Materialkartusche weist hierzu einen Auslass auf. Dieser korrespondiert mit einem Anschluss oder einer Tülle, der jedenfalls an der Materialbereitstellungsvorrichtung, insbesondere an der Wanne, ausgeführt ist, oder zumindest so gestaltet ist, dass dort abgegebenes Druckmaterial unmittelbar in die Wanne fließt.

Der Anschluss kann auch so lang ausgebildet sein, dass er jedenfalls in den Flüssigkeitsspiegel des Druckmaterials in der Wanne eintaucht. Dies ermöglicht es in vorteilhafter Ausgestaltung das Druckmaterial bei Bedarf in die Materialkartusche zurückzusaugen. Grundsätzlich ist die Materialkartusche bevorzugt biegeschlaff. Durch die Schwerkraft und/oder hydrostatische Effekte fließt Druckmaterial aus ihr raus, so dass die Wanne stets ausreichend gefüllt ist.

In vorteilhafter Ausgestaltung ist jedoch ein Presselement vorgesehen, über welches Druck auf das Material ausgeübt werden kann. Diese Ausgestaltung ist insbesondere dann bevorzugt, wenn das Druckmaterial mittelviskos ist, so dass es nicht leicht aus der Druckerkartusche ausfließt.

Bei Bedarf kann insofern auch eine Rückbewegungssperre an dem Presselement ausgebildet sein, die ein Rücksaugen des Druckmaterials in die Materialkartusche verhindert.

Besonders günstig ist es, dass erfindungsgemäß eine 1-zu-1-Zuordnung zwischen der Materialkartusche und der Wanne realisiert ist. Dies kann beispielsweise durch eine entsprechende Kodierung wie eine mechanische Kodierung sichergestellt sein. Die Kombination aus Wanne und Materialkartusche hat dann das gleiche Druckmaterial, vorausgesetzt die Kodierung erfolgt materialspezifisch.

Unter materialspezifisch sei hier sowohl die Art des verwendeten Druckmaterials, also die chemische Zusammensetzung, als auch andere Eigenschaften des Druckmaterials, wie beispielsweise die Farbe des Druckmaterials zu verstehen.

In vorteilhafter Ausgestaltung ist die räumliche Zuordnung zwischen Materialkartusche und Wanne so realisiert, dass die Fluidverbindung zwischen Materialkartusche und Wanne unabhängig von dem Zustand der Wanne gegeben ist. Die Wanne lässt sich in die Materialbereitstellungsvorrichtung im Übrigen einfahren und aus dieser ausfahren. In allen Zuständen ist die genannte Fluidverbindung gegeben.

Dies stellt sicher, dass der erwünschte Flüssigkeitsspiegel des Druckmaterials in der Wanne unabhängig von dem Zustand, also auch beim Bauen des zu erzeugenden Formteils, gewährleistet ist.

Für die Realisierung eines Stereolithografiegeräts ist es erforderlich, eine genaue Referenzhöhe beim Schichtaufbau bereitzustellen. Hierzu dient erfindungsgemäß ein transparentes Supportfenster, welches als eine Glasplatte ausgebildet sein kann, deren Oberseite als Referenzhöhe verwendet wird. Die Glasplatte dient als Basis für eine Folie, die unten an der Wanne vorgesehen ist. Die Folie wird über die Glasplatte gespannt, so dass sich unabhängig von Führungsungenauigkeiten beim horizontalen Verfahren der Wanne stets eine exakte Referenzhöhe ergibt.

Die Materialbereitstellungsvorrichtung weist in dieser Ausgestaltung bevorzugt einen entfernbaren Boden auf. Im Lagerzustand ist die Bodenwand geschlossen. Wenn die Materialbereitstellungsvorrichtung in das Stereolithografiegerät eingesetzt wird, wird die Bodenwand entfernt, wobei es sich versteht, dass die Aufnahme in dem Stereolithografiegerät bevorzugt so gestaltet ist, dass dann nicht seitlich oder von oben Licht einfällt.

Die Materialbereitstellungsvorrichtung, genauer gesagt, deren Materialkartusche, wird nach Entfernen der Bodenwand weiter abgesenkt, sodass ihre Folie auf der Glasplatte aufliegt, und zwar mit einer gewissen Vorspannung. Hierdurch ist die Referenzhöhe sichergestellt.

Das Entfernen der Bodenwand kann beispielsweise so realisiert sein, dass eine Lamellenkonstruktion nach der Art eines Rolladens vorgesehen ist, die bei geschlossener Bodenwand sich horizontal erstreckt und sich zum Öffnen zu einer Seite hin verfahren und dort aufrollen lässt. Anstelle des Aufrollens kann die Bodenwand aber auch kurzerhand in eine aufrechte Position gebracht werden, vorausgesetzt, die Höhe der Materialbereitstellungsvorrichtung reicht hierzu aus.

In der praktischen Anwendung wird insofern die Materialbereitstellungsvorrichtung zunächst einschließlich Materialkartusche und Wanne in das Stereolithografiegerät eingesetzt. In diesem Zustand ist der Rollladen geschlossen. Die Bodenwand erstreckt sich in diesem Zustand knapp unterhalb der Wanne. Die Glasplatte hat in diesem Zustand noch keinen Kontakt mit der Wanne. Die Bodenwand der Materialbereitstellungsvorrichtung wird dann entfernt und die Materialbereitstellungsvorrichtung so abgesenkt, dass die Glasplatte die Folie, die den Boden der Wanne bildet, vorspannt.

Gemäß einer alternativen Ausgestaltung kann es auch vorgesehen sein, dass die Glasplatte hierzu auf eine gewünschte und vorgegebene Höhe, die die Referenzhöhe bildet, angehoben wird.

Zu diesem Zeitpunkt, also wenn die Glasplatte mit der Folie Kontakt hat erfolgt ein Befüllen der Wanne, aber nur dann, wenn dies erforderlich ist, also wenn die Wanne nicht bereits vorher befüllt ist. Dies kann beispielsweise durch Wirkung eines Presselements realisiert sein.

Jedenfalls ragt ein Auslass der Materialkartusche in einen Anschluss oder eine Tülle, die in die Wanne eintaucht. Sowohl der Auslass als auch der Anschluss sind an dem bauseitigen Ende der Materialkartusche vorgesehen. Die Wanne kann daher aus der Materialbereitstellungsvorrichtung ausgefahren werden, ohne dass die Verbindung zwischen Auslass und Anschluss aufgehoben würde. In dem ausgefahrenen Zustand erfolgt dann das Bauen, also die Herstellung des Formteils durch das Stereolithografieverfahren.

Bevorzugt weist der Auslass und/oder der Anschluss ein Ventil auf, durch das hindurch das Druckmaterial aus der Materialkartusche abgebbar ist. Das Ventil dient dem Dosieren und erlaubt es, den Flüssigkeitsspiegel in der Wanne entsprechend den Anforderungen des Stereolithografieverfahrens auf der gewünschten Höhe zu halten.

In einer weiteren Ausführungsform lässt sich der Füllstandspiegel regeln, basierend auf dem Ausgangssignal eines Sensors, der die Höhe des Füllstandspiegels erfasst.

Das Ventil ist dann in einer Ventilaufnahme in oder an dem Anschluss aufgenommen und die vorstehend aufgeführte Kodierung kann dann zwischen Ventil und Ventilaufnahme erfolgen.

Erfindungsgemäß ist es günstig, wenn bei einem Materialwechsel die Zuordung zwischen Materialkartusche und Wanne bestehen bleibt. Dies ist mit der richtigen Kodierung sichergestellt. Die Materialbereitstellungsvorrichtung kann dem Stereolithografiegerät entnommen und an eine Lagerstelle verbracht werden. Wenn die Materialkartusche leer ist lässt sie sich lediglich durch eine Materialkartusche ersetzen, die das exakt gleiche Material aufweist. Dies ist durch die Kodierung sichergestellt, da eine Materialkartusche mit einem anderen Druckmaterial dann nicht einsetzbar ist, aufgrund der mechanisch wirkenden Kodierung für die Zuordnung zwischen Materialkartuschen und Wanne.

Grundsätzlich ist auch die Wanne austauschbar, aber wiederum nur aufgrund ihrer Kodierung nur wenn ihre Kodierung zu der Kodierung der Materialkartusche passt. Die Materialbereitstellungsvorrichtung ist grundsätzlich wiederverwendbar und ist insofern ein Mehrwegteil. Dies gilt für alle Teile der Materialbereitstellungsvorrichtung, mit Ausnahme der Materialkartusche. Diese ist als Einwegteil ausgebildet. Der Materialaufwand für die Materialkartusche selbst ist jedoch sehr begrenzt, zumal sie biegeschlaff wie ein Beutel ist.

Die Materialbereitstellungsvorrichtung mit eingesetzter Materialkartusche ist vollständig geschlossen und dicht. Solange die Wanne nicht gefüllt ist, lässt sie sich in beliebiger Weise lagern, also auch auf den Kopf stellen. Durch eine mechanische Sperre ist sichergestellt, dass die Materialkartusche lediglich dann entnommen werden kann, wenn die Wanne in ihren Ausgangszustand zurückgefahren ist, also in den Zustand, in dem sie in die Materialbereitstellungsvorrichtung aufgenommen ist.

In einer weiteren bevorzugten Ausgestaltung ist es vorgesehen, dass unten an der Materialkartusche ein Ventil angebracht ist, insbesondere ein undirektionales Ventil, also ein Ventil, dass lediglich Druckmaterial auslässt. Durch dieses Ventil hindurchgelangt das Druckmaterial in die Wanne. In vorteilhafter Ausgestaltung weist das Ventil und/oder der zugehörige Auslass eine Kodierung auf, so dass stets eine Zuordnung zu dem aktuell vernwendeten Druckmaterial gewährleistet ist.

Der Auslass reicht auch bevorzugt in die Wanne ein, insbesondere so, dass die Wanne stets in ausreichender Höhe verbleibt, unabhängig von der Position der Wanne.

In vorteilhafter Ausgestaltung ist es vorgesehen, dass unterhalb der Wanne ein transparentes Supportfenster, insbesondere eine Glasplatte, angeordnet ist, und eine Folie der Wanne spannbar ist über diese. Die Oberseite der Glasplatte plus die Stärke der Folie ergibt dann die Referenzhöhe beim Bauen oder Slicen des Stereolithographieverfahrens.

In einer weiteren Ausgestaltung weist die Wanne eine Entnahmesperre für die Materialbereitstellungsvorrichtung auf. Hierdurch ist die Materialbereitstellungsvorrihtung lediglich in dem Zustand, in dem die Wanne unter ihr ist oder in sie eingeschoben ist, entnehmbar. Bei ausgezogener Wanne wirkt hingegen die Entnahmesperre.

In einer weiteren Ausgestaltung ist das Presselement der Materialkartusche in besonderer Weise ausgestaltet. Um ein versehentliches Einsaugen bzw. Rückfließen aus der Wanne zu verhindern, weist das Presselement eine Rückbewegungssperre auf. Hierdurch lässt sich ein Saugdruck an dem Auslass sicher verhindern.

In einer weiteren Ausgestaltung der Wanne ist es vorgesehen, dass diese mit einem Sieb an eine Ecke ausgestattet ist. Es ist auch möglich mehrere Siebe je an den Ecken der Wanne vorzusehen. In der Wanne verbliebenes restliches Druckmaterial lässt sich durch das Sieb ausgießen und gleichzeitig filtern, so dass Verunreinigungen zurückgehalten werden und das verbleibende Druckmaterial insofern recycled werden kann.

Das Druckmaterial wird dann bevorzugt in eine Wanne abgegeben, die die gleiche Kodierung aufweist, also für das gleiche Druckmaterial bestimmt ist. Das Sieb kann hierbei entweder fest mit der Wanne verbunden sein, oder separat von dieser gehandhabt werden. Die Maschenweite des Siebs lässt sich in weiten Bereichen an die Erfordernisse anpassen; bevorzugt beträgt die Maschenseite weniger als 500 µm, bevorzugt etwa 150 µm.

Erfindungsgemäß günstig ist es, dass die Materialbereitstellungsvorrichtung sich von oben öffnen lässt. Dann liegt die biegeschlaffe Materialkartusche frei und kann gewechselt werden. Hierzu wird die Materialkartusche kurzerhand herausgezogen und bei der neuen Materialkartusche das Ventil in die Ventilaufnahme gesteckt. Ein Schließen der Materialbereitstellungsvorrichtung ist aufgrund der mechanischen Sperre nur dann möglich, wenn Ventil und Ventilaufnahme zueinander passen.

Auch die Wanne lässt sich bei Bedarf austauschen, wobei hierzu beispielsweise eine Schnappverbindung vorgesehen ist, die für das Austauschen der Wanne überwindbar ist.

Anstelle des bevorzugten einfachen Ventils mit mechanischer Kodierung, ist es möglich, bei Bedarf mehrere Ventile und entsprechende Ventilaufnahmen zu realisieren. Bei aus der Ventilaufnahme entnommenen Ventil schließt dieses automatisch oder manuell. Durch die Kodierung wird eine Kreuzkontamination sicher verhindert.

Das Ventil ist bevorzugt mit einer Mehrfachumlenkung nach der Art eines Labyrinths ausgestaltet. Hierdurch lässt sich gewährleisten, dass bei Entnahme der Kartusche anhaftendes Material berührungssicher aufgenommen ist, also nicht frei außen anhaftet.

In einer weiteren Ausgestaltung ist es vorgesehen, eine Wannenteilung zu realisieren. Die Wannenteilung kann beispielsweise mit 4x4 Einzelfächern realisiert sein, also 16 Wannenteilen. Entsprechende Kartuschen mit entsprechenden Ventilen stellen dann das Material in der gewünschten Weise bereit. Dies ermöglicht die Realisierung eines Mehrfarben-Formteils mit einer einzigen Materialbereitstellungsvorrichtung.

Es versteht sich, dass dann die Einzelfächer für häufigere Farben größer gewählt sein können als die Fächer mit seltener verwendet Farben.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine schematische Darstellung eines Teils einer erfindungsgemäßen Materialbereitstellungsvorrichtung in einer Ausführungsform, nämlich der Materialkartusche und der Wanne, in einer Ausführungsform der Erfindung;
- Fig. 2: eine Materialbereitstellungsvorrichtung in der Ausführungsform gemäß Fig. 1;
- Fig. 3: die Materialbereitstellungsvorrichtung in der gleichen Ausführungsform der Erfindung, jedoch unter Darstellung eines Teils eines Stereolithografiegeräts im Übrigen, in zwei Positionen zueinander;
- Fig. 4: die Ausführungsform gemäß den Figuren 1 bis 3 in ausgezogenem Zustand der Wanne;
- Fig. 5: eine Detaildarstellung von Ventil und Ventilaufnahme zu einer weiteren Ausführungsform der erfindungsgemäßen Materialbereitstellungsvorrichtung, mit einer ersten Kodierung;
- Fig. 6: eine Darstellung gemäß Fig. 5, jedoch mit einer zweiten Kodierung; und
- Fig. 7: eine Darstellung gemäß Fig. 5 und 6, jedoch mit einer dritten Kodierung.

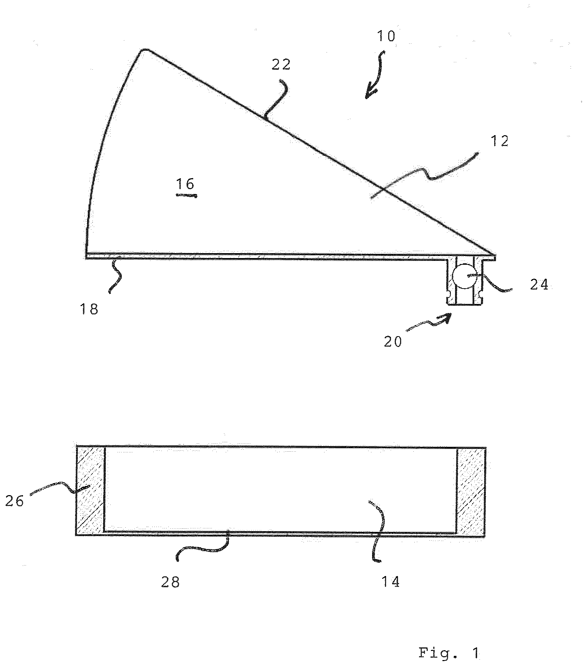

Aus Fig. 1 ist eine Materialbereitstellungsvorrichtung 10 teilweise ersichtlich. Während das externe Gehäuse, das auch als Kassette bezeichnet werden kann, aus Fig. 1 nicht ersichtlich ist, zeigt Fig. 1 zum einen die Materialkartusche 12 im Querschnitt und zum anderen die Wanne 14. Diese beiden Teile sind hier getrennt voneinander dargestellt auf Gründen der einfacheren Verdeutlichung, während sie in der Praxis zusammenwirken.

Die Materialkartusche 12 ist im Grunde als eine Art biegeschlaffer Beutel ausgebildet. Sie nimmt Druckmaterial 16 auf und weist eine Basiswand 18 auf, von welcher ausgehend sie sich im Schnitt in wesentlichen dreiecksförmig nach oben erstreckt. An der spitzen Seite des Dreiecks unten ist ein Auslass 20 angebracht, der für die Abgabe von Druckmaterial 16 aus der Materialkartusche 12 in die Wanne 14 bestimmt ist.

Während der Materialabgabe von Druckmaterial 16 kollabiert die Materialkartusche 12, wobei sich die Folie, die den Beutel der Materialkartusche 12 bildet, zur Basiswand 18 hin zusammenfaltet.

Die Materialkartusche 12 kann abgesehen von dem flüssigen Druckmaterial 16 ein Restgas aufweisen, beispielsweise Stickstoff, ist jedoch bevorzugt gasfrei, so dass der Innenraum der Materialkartusche 12 vollständig von Druckmaterial 16 gefüllt ist.

Das Druckmaterial 16 kann aufgrund der Schwerkraft frei aus dem Auslass 20 ausfließen. Alternativ ist es aber auch möglich, über ein hier nicht dargestelltes Presselement auf eine Oberwand 22 der Materialkartusche 12 Druck auszuüben, so dass die Materialkartusche 12 bei Abgabe des Druckmaterials 16 unter Wirkung der Presskraft zusammengepresst wird.

Der Auslass 20 weist in dem hier dargestellten Ausführungsbeispiel ein Ventil 24 auf. Bei Trennung und Entnahme der Kartusche 12 sperrt das Ventil 24. In vorteilhafter Ausgestaltung ist es zudem als Einwegventil ausgebildet, so dass Druckmaterial 16 aus der Materialkartusche 12 lediglich abgegeben kann aber nicht zurückgesaugt werden kann.

Die Materialkartusche 12 ist dafür bestimmt, Druckmaterial 16 in die Fig. 1 weiter unten dargestellte Wanne zu geben. Die Wanne 14 weist bevorzugt ein gleich großes oder etwas größeres Volumen als die Materialkartusche 12 auf, wobei es sich versteht, dass insofern in Abhängigkeit von dem Einzelfall ganz unterschiedliche Volumina verwendet werden können, insbesondere dann, wenn die betreffende Kartusche und Wanne gemäß einer alternativen Ausführungsform mehrere Einzelbehälter für verschiedene Farben von Druckmaterialien aufweisen.

Die Wanne 14 besteht aus einem Wannenrahmen, der an der Materialbereitstellungsvorrichtung 10 horizontal schiebebeweglich geführt ist, sowie einer Folie 28, die die Bodenwand der Wanne bildet. Die Folie 28 ist lichtdurchlässig und dafür bestimmt, auf einer in Fig. 1 nicht dargestellten Glasplatte aufzuliegen.

Das Ventil 24 der Materialkartusche 12 ragt über eine Ventilaufnahme 42 der Materialbereitstellungsvorrichtung 10 in die Wanne 14 hinein. Das Ausmaß des Hineinragens kann in beliebig geeigneter Weise gewählt werden, beispielsweise auch so, dass sich das Ventil 24 bis zur Folie 28 oder bis knapp darüber erstreckt. Bei dieser Ausgestaltung ist auch ein Rücksaugen des Druckmaterials in die Kartusche 12 unabhängig vom Füllstand der Wanne möglich.

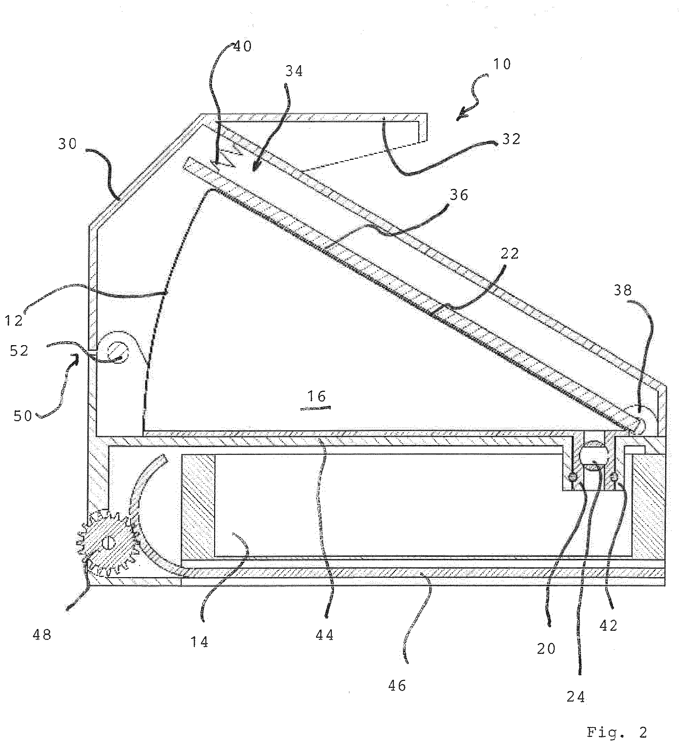

Aus Fig. 2 ist eine Ausführungsform einer erfindungsgemäßen Materialbereitstellungsvorrichtung im Schnitt ersichtlich. Eine Kassette 30, die den äußeren Rahmen der Materialbereitstellungsvorrichtung bildet, nimmt die Materialkartusche 12 und die Wanne 14 auf. Im Schnitt hat die Kassette 30 eine polygonale Form, angenähert an ein Dreieck. Entsprechend der Ausgangsform der Materialkartusche 12.

Die Kassette 30 weist einen Handgriff 32 auf, der im dargestellten Ausführungsbeispiel einstückig mit der Kassette im Übrigen dargestellt ist.

In einer modifizierten Ausgestaltung ist der Handgriff 32 nach oben aufklappbar und gibt dann den Innenraum der Kassette 30 für den Wechsel der Kartusche 12 frei.

Die Kassette 30 der Materialbereitstellungsvorrichtung 10 weist ein Presselement 34 auf, das dazu dient, Druck auf die Materialkartusche 12 zur Abgabe von Druckmaterial 16 auszuüben.

Das Presselement 34 weist eine Pressplatte 36, ein Pressgelenk 38 sowie eine Druckfeder 40 auf. Die Pressplatte 36 ist schwenkbar um das Pressgelenk 38 gelagert. Die Oberwand über die Pressplatte 36 wirkt auf die Oberwand 22 der Materialkartusche 12. Die Druckfeder 40 ist schematisch dargestellt, hat jedoch praktisch einen Federweg, der der gesamten Höhe der Materialkartusche 12 entspricht.

Wie aus Fig. 2 ersichtlich ist, sitzt der Auslass 20 abgedichtet in einem Anschluss 42, der an einer Trennwand 44 zwischen der Materialkartusche 12 und der Wanne 14 ausgebildet ist. In dieser Ausführungsform bildet der Anschluss 42, der nach der Art einer Tülle ausgebildet ist, zugleich eine Ventilaufnahme für das Ventil 24.

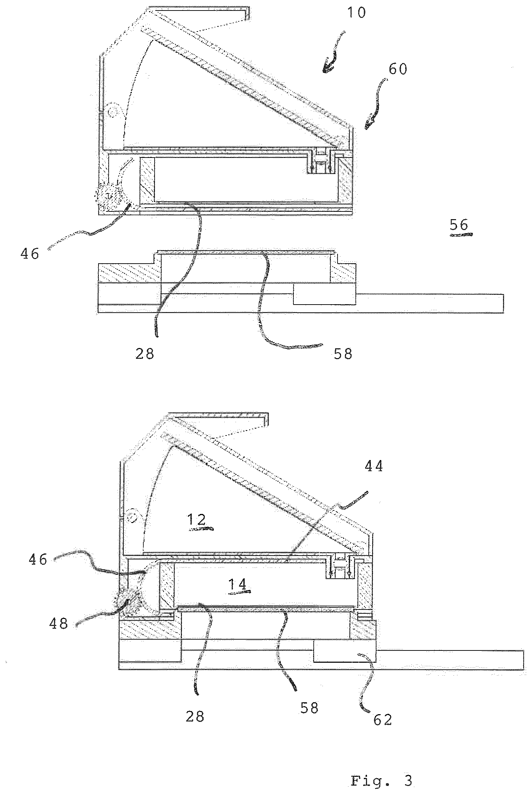

Unterhalb der Trennwand 44 erstreckt sich die Wanne 14 in einem wesentlichen quaderförmigen Raum der Materialbereitstellungsvorrichtung 10. Die Materialbereitstellungsvorrichtung 10 hat eine entfernbare Bodenwand 46. Diese ist gemäß der bevorzugten Ausgestaltung als Rolladen ausgebildet, der seitlich verfahrbar ist. Die insofern mögliche Verfahrung ergibt sich aus dem Vergleich der oberen Position und der unteren Position in Fig. 3 . Ein schematisch dargestelltes Antriebsrad 48 dient dem Verfahren des Rolladens oder der Bodenwand 46.

Die Wanne 14 ist in dem dargestellten Ausführungsbeispiel an der Vorderseite, also dem Pressgelenk 38 benachbart, bündig mit der Kassette 30 der Materialbereitstellungsvorrichtung 10. Es ist möglich, auch insofern eine Abdichtung vorzusehen, so dass das Material nicht aus der Wanne 14 heraus schwappen kann, wenn die Materialbereitstellungsvorrichtung 10 aus dem Stereolithographiegerät entfernt wird.

Der Auslass 20 taucht an einer Stelle in die Wanne 14, die dem vorderen Ende benachbart ist. Unter "vorderes Ende" sei die Seite zu verstehen, an welcher die Wanne 14 aus der Materiaibereitstellungsvorrichtung ausziehbar ist.

Bei der Ausführungsform gemäß Fig. 2 ist eine Trennfuge 50 etwa auf halber Höhe der Kassette 30 vorgesehen. Über das Ziehen eines Haltestifts 52 ist dort eine Entriegelung der beiden Teile der Kassette 30 möglich, so dass die Materialkartusche 12 gewechselt werden kann.

Aus Fig. 3 ist ersichtlich, in welcher Weise sich die Materialbereitstellungsvorrichtung 10 beim Einsetzen in das Stereolithographiegerät 56 oberhalb einer Glasplatte 58 befindet. Die Glasplatte 58 ist auf einer Schiebeführung 62 seitlich verfahrbar, und zwar in Richtung der Bauplattform, also in Richtung des vorderen Endes 60 der Materialbereitstellungsvorrichtung 10 und über dieses hinaus.

Zuvor muss ein Kontakt zwischen der Folie 28 und der Glasplatte 58 hergestellt werden. Zwischen diesen erstreckt sich in der Position gemäß Fig. 3 oben der Rolladen 46.

Vor Annäherung an die Glasplatte 58 wird der Rolladen 46 in die Freigabeposition gemäß Fig. 3 unten verfahren. Dies geschieht über Betätigung des Antriebsrads 48. Der Rolladen 46 erstreckt sich dann parallel zur Trennwand 44, knapp unterhalb dieser.

In einer modifizierten Ausgestaltung, die hier nicht dargestellt ist, wir der Rolladen tatsächlich aufgerollt, und in einer weiteren modifizierten Ausgestaltung wird er nach oben verfahren, also in den Bereich neben der Kartusche 12.

Durch Auflage auf der Glasplatte 58 wird die Folie 28 vorzugsweise verformt. Sie wird praktisch über die Glasplatte 58 gespannt, so dass ein Formschluss zwischen der Glasplatte 58 und der Wanne 14 besteht. In einer weiteren Ausführungsform liegt die Folie 28 nur auf der Glasplatte 58 auf, wobei die Wanne mit der Schiebeführung 62 verbunden ist, damit die Komponenten gemeinsam verfahren werden können. Hierbei ist es bevorzugt, dass die Folie 28 gespannt in der Wanne 14 vorliegt und nur ein minimaler Abstand zwischen der Folie 28 und der Glasplatte 58 besteht.

Für das Spannen der Folie 28 über das transparente Supportfenster, dass als Glasplatte ausgebildet sein kann, sind bevorzugt mehrere Niederhalter vorgesehen. Diese Niederhalter können auch außerhalb der Materialbereitstellungsvorrichtung vorgesehen sein. Gleiches ist denkbar für die Fixierung bzw. Verbinden der Wanne 14 an der Schiebeführung 62.

Alternativ ist es auch möglich, durch einen automatisierten mechanischen Öffnungsmechanismus der Dosiervorrichtung bzw. des Ventils 24 den Formschluss zwischen dem transparenten Supportfenster und der Wanne 14 zu gewährleisten.

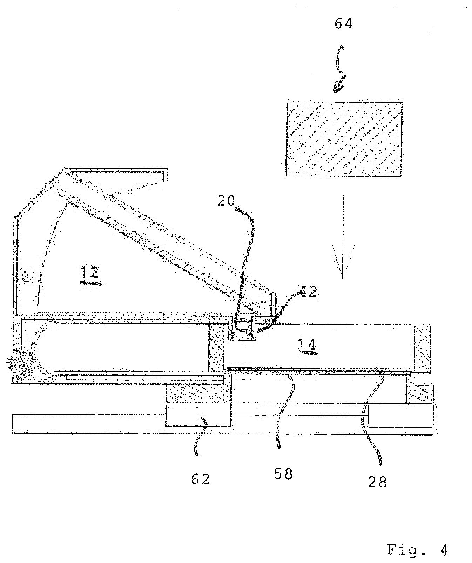

Die Glasplatte 58 ist auf einer Schiebeführung 62 gelagert. Gemäß Fig. 4 lässt sich die Einheit aus der Wanne 14 - einschließlich der Folie 28 - und der Glasplatte 58 über die Schiebeführung 62 verfahren, so dass diese Einheit in dem Bereich der Bauplattform 64 liegt. In diesem Zustand erfolgt der Schichtaufbau und die Bereitstellung des herzustellenden Formteils.

Wie aus Fig. 4 ersichtlich ist, taucht der Anschluss 42 und der Auslass 20 nach wie vor in die Wanne 14 ein. Die Weiterversorgung der Wanne 14 mit Druckmaterial 16 aus der Materialkartusche 12 ist damit gewährleistet.

Das unter Fig. 3 bzw. 4 beschriebene Inkontaktbringen der Referenzplatte bzw. Glasplatte 58 mit der Folie 28 der Wanne 14 kann natürlich durch andere Ausführungen umgesetzt werden.

Beispielsweise kann die Materialbereitstellungsvorrichtung 10 verfahrbar ausgestaltet sein, wobei nach der Kontaktaufnahme der Folie 28 und der Referenzplatte bzw. Glasplatte 58 (gespannt oder ungespannt über Glasplatte/Supportfenster), wie oben beschrieben, die Materialbereitstellungsvorrichtung 10 nach links oder rechts verfahren wird, so dass die ortsfeste Referenzplatte bzw. Glasplatte 58 in Verbindung mit der Wanne 14 freigegeben wird bzw. freiliegt.

In einer weiteren Ausführungsform ist die Wanne 14 aus der Materialbereitstellungsvorrichtung 10 über eine Schiebeführung direkt in Richtung zu einem ortsfesten Supportfenster bzw. einer Glasplatte 58 eines Stereolithographiegeräts verfahr bzw. bewegbar, über welche die verfahrbare Wanne 14 bzw. dessen Folie 28 spannbar ist oder auf dieser aufliegt.

Bei den Materialbereitstellungsvorrichtungen 10, bei denen die Wanne 14 verfahrbar gelagert ist, ist es sinnvoll das Supportfenster bzw. die Glasplatte 58 mit einem Tropfschutz zu versehen. Der Tropfschutz könnte bspw. an der Wanne 14 oder der Schiebervorrichtung montierbar oder fix verbunden vorgesehen sein und als eine Abdeckung bzw. Platte ausgebildet sein.

In eingefahrenem Zustand der Wanne 14 bzw. dem Startpunkt der Schiebevorrichtung, wird dann der Tropfschutz das Supportfenster bzw. die Glasplatte 58 überdecken. Beim vollständigen Ausfahren der Wanne 14 bzw. Erreichen der Endposition der Schiebevorrichtung befindet sich der Tropfschutz nicht mehr in einem Bereich des Supportfensters bzw. der Glasplatte 58.

Die Abdeckung bzw. Platte wird hierbei in Schienen, welche am Stereolithografiegeräts vorgesehen sind, geführt.

Vorzugsweise ist in der Abdeckung bzw. Platte ein Abtropfbecken vorgesehen, welches von der Bauplattform 64 abtropfendes Material auffängt.

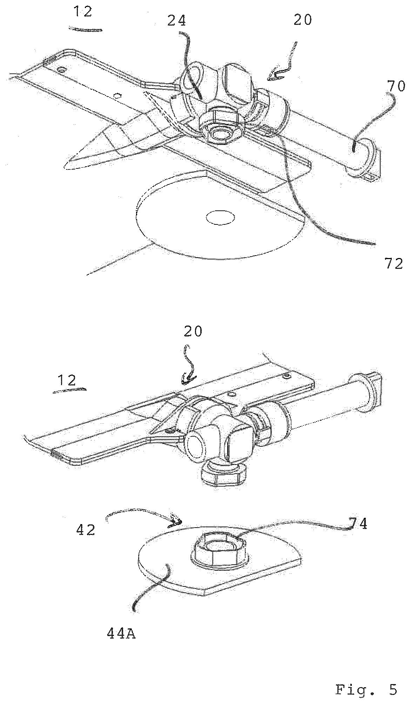

Eine weitere Ausführungsform der erfindungsgemäßen Materialbereitstellungsvorrichtung ist aus den Figuren 5, 6 und 7 ersichtlich. Gleiche Bezugszeichen weisen hier wie auch in den weiteren Figuren auf gleiche Teile hin. Ein Ventil ist als Einwegventil mit Labyrinth in dem Auslass 20 der Druckerkassette 12 angebracht. Über einen Betätigungshebel 70 lässt es sich öffnen und schließen. Das Ventil 24 und der Auslass 20 haben an ihrer Unterseite ein speziell geformtes Formteil 72. Dieses passt mechanisch genau zu einem Formteil 74, das in Fig. 5 unten dargestellt ist und die Verbindung zwischen dem Auslass 20 und dem Anschluss 42 ermöglicht. Hier sind Dichtungen vorgesehen, die aus Fig. 5 jedoch nicht ersichtlich sind.

Die Formteile 72 und 74 weisen eine zueinander passende Form auf. Beide Formteile sind insofern für die Zuordnung zwischen der Materialkartusche 12 und der zugehörigen Wanne 14 bestimmt. Sie bilden eine Kodierung zueinander, so dass sichergestellt ist, dass an die Wanne 14 stets das gleiche Druckmaterial 14 aus der Kartusche 12 abgegeben wird.

In dieser Ausgestaltung ist eine Wand 44A Teil der Wanne, aber zugleich in dieser verfahrbar, so dass die erwünschte Kodierung und Zuordnung der je relevanten Teile zueinander möglich ist.

Die Formteile 72 und 74 weisen gemäß Fig. 5 einen im Wesentlichen dreieckigen Querschnitt auf.

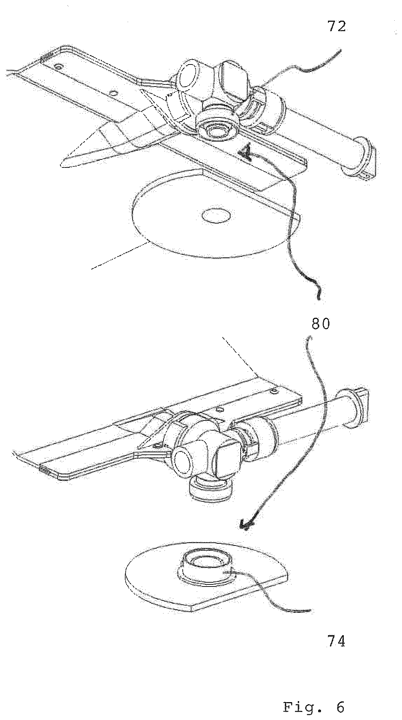

Fig. 6 zeigt eine hierzu nicht passende Kodierung 80 mit runden Formteilen 72 und 74.

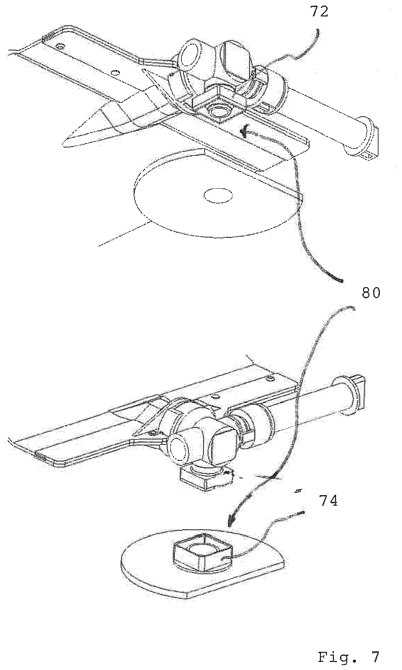

Fig. 7 zeigt eine entsprechende Kodierung 80 mit zueinander passenden Formteilen 72 und 74, die einen quadratischen Querschnitt aufweisen.

Es versteht sich, dass die hier dargestellte Ausgestaltung von Kodierungen 80 lediglich als beispielhaft anzusehen ist und beliebige andere, bevorzugt mechanische Kodierungen, möglich sind, ohne den Bereich der Erfindung zu verlassen.

## Patentansprüche

1. Materialbereitstellungsvorrichtung mit einer Wanne für ein Stereolithographiegerät, um zu härtendes Druckmaterial (16), insbesondere ein Fotopolymer, bereitzustellen, wobei
die Wanne (14) sich in die Materialbereitstellungsvorrichtung im Übrigen einfahren und aus dieser ausfahren lässt,
wobei die Materialbereitstellungsvorrichtung (10) eine Materialkartusche (12) aufweist, die das Druckmaterial (16) aufnimmt und allseitig umgibt, und dass die Materialkartusche (12) einen Auslass (20) aufweist, über welchen das Druckmaterial (16) abgebbar ist und welcher in einem Anschluss (42) oder einer Tülle in der Materialbereitstellungsvorrichtung (10) vorgesehen ist und sich mindestens teilweise an dieser oder in dieser abstützt oder gegen diese abdichtet und
wobei der Auslass (20) in die verfahrbare Wanne (14) hineinragt, die in die Materialbereitstellungsvorrichtung im Übrigen (10) vollständig einfahrbar und/oder in dieser verfahrbar gelagert ist.

2. Materialbereitstellungsvorrichtung nach Anspruch 1, **dadurch gekennzeichnet, dass** die Wanne (14) getrennt von der Materialbereitstellungsvorrichtung (10) im Übrigen austauschbar ist

3. Materialbereitstellungsvorrichtung nach Anspruch 1 oder 2, **dadurch gekennzeichnet, dass** die Materialbereitstellungsvorrichtung (10) eine biegeschlaffe Materialkartusche (12) aufweist.

4. Materialbereitstellungsvorrichtung nach einem der vorhergehenden Ansprüche, **dadurch gekennzeichnet, dass** die Wanne über eine Schiebführung (62) aus der Materialbereitstellungvorrichtung (10) verfahrbar bzw. bewegbar ist.

5. Materialbereitstellungsvorrichtung nach einem der vorhergehenden Ansprüche, **dadurch gekennzeichnet, dass** die Wanne (14) in dem in die Materialbereitstellungsvorrichtung (10) eingefahrenen Zustand teilweise lichtdicht und materialdicht ist, wobei die gesamte Materialbereitstellungsvorrichtung mit der Wanne (14) und Materialkartusche (12) geeignet ausgebildet ist, damit sie als Einheit aus einem Stereolithographiegerät entnehmbar und wiedereinsetzbar ist.

6. Materialbereitstellungsvorrichtung nach Anspruch 3 bis 5, **dadurch gekennzeichnet, dass** die Vorrichtung eine entfernbare Bodenwand (46) aufweist, über welche der Boden der Materialbereitstellungsvorrichtung (10) lichtdicht verschließbar ist und bei Bedarf unter Freigabe der Wanne (14) öffenbar ist.

7. Materialbereitstellungsvorrichtung nach Anspruch 6, **dadurch gekennzeichnet,**
**dass** die Bodenwand (46) insbesondere als Lamellenkonstruktion nach der Art eines Rollladens ausgebildet ist und dass die Lamellenkonstruktion über eine Unterecke der Materialbereitstellungsvorrichtung (10) umlenkbar und zu einer Rückwand der Materialbereitstellungsvorrichtung (10) verschiebbar ist.

8. Materialbereitstellungsvorrichtung nach einem der vorhergehenden Ansprüche, **dadurch gekennzeichnet, dass** die Materialbereitstellungsvorrichtung (10) ein Öffnungsmittel wie eine Tür oder eine Klappe aufweist, oder aufklappbar ist oder einen Deckel aufweist, der entfernbar ist, über welches Öffnungsmittel die Materialkartusche (12) entnehmbar und eine oder mehrere weitere Materialkartusche (12) einsetzbar ist.

9. Materialbereitstellungsvorrichtung nach einem der vorhergehenden Ansprüche, **dadurch gekennzeichnet, dass** eine oder mehrere Wannen (14) vorgesehen sind, die je nach Wahl des Benutzers einsetzbar sind, wobei eine Codierung an der Wanne (14) zu einer Codierung an der Materialkartusche (12) passt und voneinander verschiedene Codierungen nicht zueinander passen.

10. Materialbereitstellungsvorrichtung nach einem der vorhergehenden Ansprüche, dass eine Dosiervorrichtung an der Materialkartusche (12) vorgesehen ist, über welche Druckmaterial (16) in eine verfahrbare Wanne sowohl im eingefahrenen, im ausgefahrenen Zustand als auch während der Bewegung der Wanne (14) in diese abgebbar ist.

11. Materialbereitstellungsvorrichtung nach einem der vorhergehenden Ansprüche, **dadurch gekennzeichnet, dass** die Materialkartusche (12) ein insbesondere unidirektionales Ventil (24) aufweist, das für das Dosieren in eine Wanne (14) der Materialbereitstellungsvorrichtung bestimmt ist.

12. Materialbereitstellungsvorrichtung nach einem der vorhergehenden Ansprüche, **dadurch gekennzeichnet, dass** die Materialkartusche (12) ein insbesondere unidirektionales Ventil (24) aufweist, das für das Nachfüllen des Druckmaterials (16) bestimmt ist und eine Kodierung, die eine Zuordnung zu dem verwendeten Druckmaterial gewährleistet, aufweist, die das Nachfüllen des aktuell verwendeten Druckermaterial (16) ermöglicht.

13. Materialbereitstellungsvorrichtung nach einem der vorhergehenden Ansprüche, **dadurch gekennzeichnet, dass** ein Ventil (24) an der Materialkartusche (12), gegen diese abdichtend oder einstückig mit dieser ausgebildet ist, insbesondere an dem Auslass (20), welches Ventil (24) sich gegen eine Ventilaufnahme (42) dichtend abstützt, welche Ventilaufnahme (42) mit einer Wanne (14) der Materialbereitstellungsvorrichtung (10) verbunden ist, welche insbesondere zwischen der Wanne (14) und Materialkartusche (12) angeordnet ist.

14. Materialbereitstellungsvorrichtung nach Anspruch 13, **dadurch gekennzeichnet,**
**dass** eine Ventilaufnahme (42) eine Kodierung aufweist, die eine Zuordnung zu der aktuell verwendeten Materialkartusche (12) ermöglicht.

15. Materialbereitstellungsvorrichtung nach einem der vorhergehenden Ansprüche, **dadurch gekennzeichnet, dass** eine Wannenteilung mit Einzelfächern vorgesehen ist.

16. Materialbereitstellungsvorrichtung nach einem der vorhergehenden Ansprüche, **dadurch gekennzeichnet, dass** eine Wanne (14) einen transparenten Boden aufweist, und aus der Materialbereitstellungsvorrichtung (10) ausfahrbar und in diese einfahrbar ist oder die Materialbereitstellungvorrichtung verfahrbar zu der Wanne (14) ist.

17. Materialbereitstellungsvorrichtung nach einem der vorhergehenden Ansprüche, **dadurch gekennzeichnet, dass** die Wanne (14) an einer Schiebeführung (60) an der Materialbereitstellungsvorrichtung (10) geführt ist und über eine Schnapp-/Rastverbindung von der Materialbereitstellungsvorrichtung (10) entfernbar ist und gegen ein weiteres Exemplar der Wanne (14) austauschbar ist.

18. Materialbereitstellungsvorrichtung nach einem der vorhergehenden Ansprüche, **dadurch gekennzeichnet, dass** die Materialkartusche (12) ein Presselement (34) aufweist oder ein Presselement (34) oberhalb der Materialkartusche (12), insbesondere in der Materialbereitstellungsvorrichtung (10), angeordnet ist, über welches Druck oder Saugdruck auf das Material ausübbar ist.

## Claims

1. A material provision device having a trough for a stereolithography apparatus to provide embossing material (16) to be cured, especially a photopolymer, wherein the trough (14) is otherwise able to be moved into and out of the material provision device,
wherein the material provision device (10) comprises a material cartridge (12) which receives the embossing material (16) enclosing it on all sides, and in that the material cartridge (12) comprises an outlet (20) through which the embossing material (16) is dispensable and which is provided in a connection (42) or a spout in the material provision device (10) and is supported at least partially thereon or therein or seals against it, and wherein
the outlet (20) projects into the movable trough (14), which is completely retractable into the material provision device (10) and/or is movably mounted therein.

2. The material provision device according to claim 1, **characterized in that** the trough (14) is exchangeable separately from the rest of the material provision device (10).

3. The material provision device according to claim 1 or 2, **characterized in that** the material provision device (10) comprises a flexible material cartridge (12).

4. The material provision device according to one of the preceding claims,
**characterized in that** the trough is movable out of the material provision device (10) via a sliding guide (62).

5. The material provision device according to one of the preceding claims,
**characterized in that** the trough (14) in the state retracted into the material provision device (10) is partially light-tight and material-tight, wherein the entire material provision device including the tray (14) and material cartridge (12) is suitably configured to be removable and reinsertable from a stereolithography apparatus as a unit.

6. The material provision device according to claims 3 to 5,
**characterized in that** the device comprises a removable bottom wall (46) which is used for the bottom of the material provision device (10) to be sealable in a light-tight manner and, if required, is openable upon release of the trough (14), if required.

7. The material provision device according to claim 6,
**characterized in that** the bottom wall (46) is designed especially as a lamella construction in the manner of a roller shutter, and **in that** the lamella construction is deflectable over a sub-corner of the material provision device (10) and is displaceable toward a rear wall of the material provision device (10).

8. The material provision device according to one of the preceding claims,
**characterized in that** the material provision device (10) comprises an opening means, such as a door or a flap, or is openable or comprises a cover which is removable, via which opening means the material cartridge (12) is removable and one or more further material cartridges (12) are insertable.

9. The material provision device according to one of the preceding claims,
**characterized in that** one or more troughs (14) are provided, which are insertable according to the user's choice, wherein a coding on the trough (14) matches a coding on the material cartridge (12) and codings different from each other do not match each other.

10. The material provision device according to one the preceding claims,
**characterized in that** a metering device is provided on the material cartridge (12), which is used for the embossing material (16) to be dispensable into a movable trough both in the retracted state, in the extended state and during movement of the trough (14) thereinto.

11. The material provision device according to one of the preceding claims,
**characterized in that** the material cartridge (12) comprises an especially unidirectional valve (24) which is intended for metering into a trough (14) of the material provision device.

12. The material provision device according to one of the preceding claims,
**characterized in that** the material cartridge (12) comprises an especially unidirectional valve (24), which is intended for refilling the embossing material (16) and comprising a coding, which ensures assignment to the embossing material used, which enables refilling the currently used embossing material (16).

13. The material provision device according to one of the preceding claims,
**characterized in that** a valve (24) is formed on the material cartridge (12), sealing against it or is integrally formed with it, in particular on the outlet (20), which valve (24) is sealingly supported against a valve receptacle (42), which valve receptacle (42) is connected to a trough (14) of the material provision device (10), which is arranged especially between the trough (14) and material cartridge (12).

14. The material provision device according to claim 13,
**characterized in that** a valve receptacle (42) comprises a coding which enables assignment to the material cartridge (12) currently being used.

15. The material provision device according to one of the preceding claims,
**characterized in that** a trough division having individual compartments is provided.

16. The material provision device according to one of the preceding claims,
**characterized in that** a trough (14) comprises a transparent bottom and is extendable from and retractable into the material provision device (10) or the material provision device is movable in relation to the trough (14).

17. The material provision device according to one of the preceding claims,
**characterized in that** the trough (14) is guided on a sliding guide (60) on the material provision device (10) and is removable from the material provision device (10) using a snap/latch connection and is exchangeable for another trough copy (14).

18. The material provision device according to one the preceding claims,
**characterized in that** the material cartridge (12) comprises a pressing element (34), or a pressing element (34) is arranged above the material cartridge (12), especially in the material provision device (10), which is used to be able to apply pressure or suction pressure onto the material.

## Revendications

1. Dispositif de préparation de matériaux avec une cuve pour un dispositif de stéréolithographie, afin de préparer un matériau d'impression (16) à durcir, en particulier un photopolymère, où la cuve (14) peut par ailleurs être introduite dans le dispositif de préparation de matériau et être sortie de celui-ci, où le dispositif de préparation de matériau (10) présente une cartouche de matériau (12) qui reçoit le matériau d'impression (16) et l'entoure de tous côtés, et la cartouche de matériau (12) présente une sortie (20), par laquelle le matériau d'impression (16) peut être évacué et qui est prévue dans un raccord (42) ou un T011e dans le dispositif de mise à disposition de matériau (10) et s'appuie au moins partiellement sur celui-ci ou dans celui-ci ou est étanche par rapport à celui-ci et où la sortie (20) pénétre dans la cuve mobile (14) qui peut par ailleurs être entièrement introduite dans le dispositif de mise à disposition de matériau (10) et/ou qui est logée de manière mobile dans celui-ci.

2. Dispositif de mise à disposition de matériaux selon la revendication 1, **caractérisé en ce que** la cuve (14) peut par ailleurs être remplacée séparément du dispositif de mise à disposition de matériaux (10).

3. Dispositif de préparation de matériaux selon la revendication 1 ou 2, **caractérisé en ce que** le dispositif de préparation de matériaux (10) présente une cartouche de matériaux (12) souple en flexion.

4. Dispositif de mise à disposition de matériaux selon l'une des revendications précédentes, **caractérisé en ce que** la cuve peut être déplacée ou hors du dispositif de mise à disposition de matériaux (10) par un guide coulissant (62).

5. Dispositif de mise à disposition de matériaux selon l'une des revendications précédentes, **caractérisé en ce que** la cuve (14) est partiellement étanche à la lumière et étanche au matériau dans l'état rétracté dans le dispositif de mise à disposition de matériau (10), où l'ensemble du dispositif de mise à disposition de matériau avec la cuve (14) et la cartouche de matériau (12) est conçu de manière appropriée pour pouvoir être retiré et remis en place en tant qu'unité à partir d'un dispositif de stéréolithographie.

6. Dispositif de mise à disposition de matériaux selon les revendications 3 à 5, **caractérisé en ce que** le dispositif présente une paroi de fond (46) amovible, par laquelle le fond du dispositif de mise à disposition de matériau (10) peut être fermé de manière étanche à la lumière et peut être ouvert en cas de besoin en libérant la cuve (14).

7. Dispositif de mise à disposition de matériaux selon la revendication 6, **caractérisé en ce que** la paroi de fond (46) est réalisée en particulier sous forme de construction à lamelles à la manière d'un volet roulant et **en ce que** la construction à lamelles peut être déviée par un coin inférieur du dispositif de mise à disposition de matériaux (10) et peut être déplacée vers une paroi arrière du dispositif de mise à disposition de matériaux (10).

8. Dispositif de mise à disposition de matériaux selon l'une des revendications précédentes, **caractérisé en ce que** le dispositif de mise à disposition de matériau (10) présente un moyen d'ouverture tel qu'une porte ou un clapet, ou est rabattable ou présente un couvercle qui peut être enlevé, et la cartouche de matériau (12) peut être retirée et une ou plusieurs autres cartouches de matériau (12) peuvent être insérées par ledit moyen d'ouverture.

9. Dispositif de mise à disposition de matériaux selon l'une des revendications précédentes, **caractérisé en ce qu'**une ou plusieurs cuves (14) sont prévues, qui peuvent être utilisés selon le choix de l'utilisateur, où un codage sur la cuve(14) correspond à un codage sur la cartouche de matériel (12) et des codages différents les uns des autres ne correspondent pas les uns aux autres.

10. Dispositif de mise à disposition de matériaux selon l'une des revendications précédentes, **caractérisé en ce que** sur la cartouche de matériau (12) un dispositif de dosage est prévu par lequel du matériau d'impression (16) peut être distribué dans une cuve mobile, aussi bien à l'état rentré qu'à l'état sorti, ainsi que pendant le déplacement de la cuve (14) dans celle-ci.

11. Dispositif de mise à disposition de matière selon l'une quelconque des revendications précédentes, **caractérisé en ce que** la cartouche de matière (12) comporte une vanne (24), en particulier une vanne unidirectionnelle, prévue pour le dosage dans une cuve (14) du dispositif de mise à disposition de matériaux.

12. Dispositif de mise à disposition de matière selon l'une quelconque des revendications précédentes, **caractérisé en ce que** la cartouche de matière (12) comporte une vanne (24), en particulier une vanne unidirectionnelle, prévue pour le remplissage du matériau d'impression (16) et qui comporte un codage garantissant une association avec le matériau d'impression utilisé, qui permet le remplissage du matériau d'impression (16) actuellement utilisé.

13. Dispositif de préparation de matériaux selon l'une des revendications précédentes, **caractérisé en ce qu'**une vanne (24) est réalisée sur la cartouche de matériau (12), de manière étanche contre celle-ci ou d'une seule pièce avec celle-ci, en particulier sur la sortie (20), laquelle soupape (24) s'appuie de manière étanche contre un logement de soupape (42), lequel logement de soupape (42) est relié à une cuve (14) du dispositif de préparation de matériaux (10), qui est disposée en particulier entre la cuve (14) et la cartouche de matériaux (12).

14. Dispositif de mise à disposition de matériaux selon la revendication 13, **caractérisé en ce qu'**un logement de soupape (42) présente un codage qui permet une association avec la cartouche de matériau (12) actuellement utilisée.

15. Dispositif de mise à disposition de matériel selon l'une des revendications précédentes, **caractérisé en ce qu'**une division de la cuve en compartiments individuels est prévue.

16. Dispositif de mise à disposition de matériau selon l'une des revendications précédentes, **caractérisé en ce qu'**une cuve (14) présente un fond transparent, et peut être sorti du dispositif de mise à disposition de matériau (10) et rentré dans celui-ci, ou le dispositif de mise à disposition de matériau peut être déplacé par rapport au bac (14).

17. Dispositif de mise à disposition de matériaux selon l'une des revendications précédentes, **caractérisé en ce que** la cuve (14) est guidé sur un guide coulissant (60) sur le dispositif de mise à disposition de matériaux (10) et peut être retiré du dispositif de mise à disposition de matériaux (10) par une liaison à enclenchement/encliquetage et peut être échangé contre un autre exemplaire de la cuve (14).

18. Dispositif de mise à disposition de matériaux selon l'une des revendications précédentes, **caractérisé en ce que** la cartouche de matériau (12) présente un élément de pression (34) ou qu'un élément de pression (34) est disposé au-dessus de la cartouche de matériau (12), en particulier dans le dispositif de mise à disposition de matériau (10), au-dessus duquel une pression ou une aspiration peut être exercée sur le matériau.
